# EUROPÄISCHE PATENTSCHRIFT

(11) **EP 0 741 924 B1**
(45) Veröffentlichungstag und Bekanntmachung des Hinweises auf die Patenterteilung: **15.07.1998**
(21) Anmeldenummer: 95907577.1
(22) Anmeldetag: 21.01.1995
(51) Int. Cl.: H01S 3/0941, H01S 3/093, H01S 3/109, H01S 3/02

(54) **TRANSVERSAL GEPUMPTER FESTKÖRPERLASER**
TRANSVERSELY PUMPED SOLID-STATE LASER
LASER SOLIDE POMPE TRANSVERSALEMENT

(30) Priorität: 29.01.1994 DE 4402668
(43) Veröffentlichungstag der Anmeldung: 13.11.1996
(73) Patentinhaber: BALZERS AKTIENGESELLSCHAFT, 9496 Balzers (LI)
(72) Erfinder: DOMBI, Adam, CH-8004 Zürich (CH)
(86) Internationale Anmeldenummer: EP9500216
(87) Internationale Veröffentlichungsnummer: WO9520833

(56) Entgegenhaltungen:
- EP-A- 0 251 718
- EP-A- 0 251 719
- GB-A- 2 136 147
- US-A- 5 130 996
- OPTOELECTRONICS DEVICES AND TECHNOLOGIES, Bd.8, Nr.2, Juni 1993, TOKYO JP Seiten 249 - 257 K.TATSUMI ET AL. 'DIODE-PUMPED HIGH EFFICIENCY Nd:YLF LASER WITH REFLECTION-TYPE GRATINGS'
- IEEE JOURNAL OF QUANTUM ELECTRONICS., Bd.28, Nr.4, April 1992, NEW YORK US Seiten 1088 - 1100 J.R.LEGER ET AL. 'GEOMETRICAL TRANSFORMATION OF LINEAR DIODE-LASER ARRAYS FOR LONGITUDINAL PUMPING OF SOLID-STATE LASERS'
- ZEITSCHRIFT FUR ANGEWANDTE MATHEMATIK UND PHYSIK, Bd.22, Nr.4, 25. Juli 1971, BASEL CH Seiten 774 - 776 H.U.LAUENBERGER ET AL. 'PUMPKAVITÄT FÜR EINEN FESTKÖRPERLASER MIT IDEALER STRAHLGEOMETRIE'
- IBM TECHNICAL DISCLOSURE BULLETIN, Bd.25, Nr.78, Dezember 1982, NEW YORK US Seiten 3710 - 3711 N.SCHLOTTER 'LASER ALIGNEMENT TOOL FOR FOURIER TRANSFORM INFRARED SPECTROMETERS'
- PATENT ABSTRACTS OF JAPAN vol. 4, no. 40 (E-4) (522) 28. März 1980 & JP,A,55 011 363 (NIPPON DENSHIN DENWA KOSHA) 26. Januar 1980

## Beschreibung

Die Erfindung betrifft einen Festkörperlaser mit einem Resonator und einem in wesentlichen achsparallel zur Resonatorachse angeordneten, stabförmigen Laserkristall, welcher durch wenigstens zwei transversal eingekoppelte, achssymmetrische Pump-Lichtstrahlen zumindest auf einem Teil einer Länge angeregt wird.

Bekannterweise besteht ein Festkörperlaser aus einem Laserkristall, welcher stabförmig, zylindrisch ausgebildet ist und einer Pump-Lichtquelle, welche in radialem Abstand zum Laserkristall angeordnet ist. Desweiteren sind regelmäßig optische Spiegel vorgesehen, welche entweder auf die Stirnflächen des Laserkristalls aufgesetzt sind oder durch eine entsprechende Optomechanik im Abstand zu den Stirnflächen des Laserkristalls angeordnet sind. Einer dieser beiden Spiegel ist voll reflektierend und der zweite Spiegel ist teildurchlässig und als Aufkoppelspiegel ausgebildet, aus welchem der Laserstrahl austritt.

Der Laserkristall wird im Betrieb von der Pump-Lichtquelle mit Lichtenergie beaufschlagt, wobei der Laserkristall als aktives Medium Lichtenergie bestimmter Wellenlänge absorbiert. Durch diese Absorbtion wird der Laserkristall bzw. dessen Kristallionen in ein höheres Energieniveau angeregt. Aus diesem angeregten Energie zustand kehren die Kirstallionen unter Abgabe von Laserlichtenergie in ein niedrigeres Energieniveau zurück.

Als konventionelle Pump-Lichtquelle werden beispielsweise Xenon-Blitzlampen für eine gepulste Emission oder auch Krypton-Hochdruck-Gasentladungslampen für eine kontinuierliche Emission verwendet.

Desweiteren werden als Pump-Lichtquelle auch Laserdiodenanordnungen verwendet, welche den Vorteil haben, daß sich deren emittierter Pump-Lichtstrahl auf das jeweilige Absorbtionsmaximum des verwendeten Laserkristalls abstimmen läßt. Dadurch wird erreicht, daß sich der Festkörperlaser bzw. Laserkristall aufgrund der erreichten hohen differenziellen Absorbtion wesentlich effizienter pumpen läßt als durch konventionelle Pump-Lichtquellen, welche ein wesentlich größeres Lichtspektrum aufweisen, welches vom Laserkristall nur in engen Bereichen absorbiert werden kann.

Allen diodengepumpten Festkörperlasern ist gemein, daß die zur Erzeugung eines Laserstrahls erforderliche Inversion im Laserkristall durch die Pump-Lichtenergie einer Anordnung von einer oder mehrerer Laserdioden als Pump-Lichtquelle bereitgestellt wird. Die Einkupplung der Pump-Lichtleistung in den Laserkristall kann jedoch auf verschiedene Weise erfolgen, wobei im allgemeinen zwischen longitudinalem und transversalem Pumpen unterschieden wird.

Beim transversalen Pumpen erfolgt die Einkupplung des Anregungslichts bzw. der Pump-Lichtstrahlen in den Laserkristall radial von außen. Die durch die Pump-Lichtstrahlen im Laserkristall erzeugten Laserstrahlen breiten sich in Längsrichtung des Laserkristalls aus und werden an den jeweiligen Stirnseiten von den dort angeordneten Spiegeln reflektiert, so daß sich im Laserkristall bzw. im Resonator eine stehende Laserlichtwelle ausbildet. Durch das kontinuierliche Pumpen des Laserkristalls durch das Pump-Licht wird diese stehende Welle ständig verstärkt. Einer der beiden Reflektorspiegel ist halbdurchlässig und dient als sogenannter Auskoppelspiegel, d.h. daß ein Teil des Laserlichtstrahles durch diesen Auskoppelspiegel in Form eines Laserstrahls aus dem Festkörperlaser bzw. aus dem Resonator austritt.

Um eine möglichst hohe Energieausbeute zu erreichen, ist es notwendig, die Reflektorspiegel äußerst präzise zu justieren, so daß die erzeugten Laserstrahlen stets möglichst vollständig den Laserkristall passieren und möglichst keine Streuverluste auftreten. Desweiteren ist es üblich, in den Strahlengang des Laserstrahls zwischen dem Laserkristall und dem vollständig reflektierenden Reflektor einen sogenannten Frequenzverdopplerkristall einzusetzen, welcher die Aufgabe hat, die im Laserkristall erzeugte Fundamentale, d.h. Grundschwingung des Laserstrahls in die erste oder in eine harmonische Schwingung höherer Ordnung des Laserstrahls umzuwandeln. Durch diese Frequenzverdopplung wird ebenfalls eine Leistungssteigerung des Festkörperlasers erreicht.

Desweiteren sind als Auskoppelspiegel auch Reflektoren einsetzbar, welche nur für die entsprechende Harmonische des Laserstrahls durchlässig sind und welche die Fundamentale des im Laserkristall erzeugten Laserstrahls vollständig reflektieren, so daß nur die Harmonische den Festkörperlaser als Laserstrahl verläßt.

Die Herstellung eines solchen zuverlässigen und effizient arbeitenden, sowie kostengünstig herzustellenden frequenzverdoppelten Lasersystems ist mit einer Reihe von Schwierigkeiten behaftet.

So ist die Optomechanik, d.h. die für die Anordnung bzw. Fixierung des Resonators mit seinen Resonatorspiegeln erforderliche Mechanik äußerst aufwendig. Da die Optomechanik äußerst präzise gearbeitet sein muß, entfällt auf sie ein großer Teil der Herstellkosten eines Festkörperlasers. Die Mechanik ist aus präzise gearbeiteten mechanischen Teilen hergestellt, welche die optischen Elemente, die den Laserkristall und die Reflektorspiegel in einer vorbestimmten, die Lasergeometrie bestimmenden Position halten müssen. Insbesondere durch thermische Einflüsse, d.h. Temperaturunterschiede je nach Einsatzort eines Festkörperlasers sind an die Temperaturformbeständigkeit der gesamten Optomechanik hohe Anforderungen gestellt. Desweiteren sind diese bekannten optomechanischen Systeme auch gegen Erschütterungen äußerst empfindlich, so daß es häufig vorkommt, daß ein Festkörperlaser bzw. dessen Resonator nachjustiert werden muß.

Eine weitere Problematik des Festkörperlasers ist das sogenannte "Thermal-Lensing". Darunter versteht man die Bildung einer optischen Linsenwirkung im normalerweise homogenen Laserkristallmaterial. Diese Linsenwirkung entsteht durch die Ausbildung eines Temperaturgradienten senkrecht zur optischen Achse im Laserkristall. D.h., daß der Laserkristall während des Betriebs über seinen Querschnitt verteilt unterschiedliche Temperaturen aufweist. Die im Betrieb entstandenen Temperaturgradienten verändern bereichsweise den Brechungsindex des Laserkristalls und führen zu einer Ablenkung des Laserstrahls im Laserkristall, was zu Bildfehlern führt. Je nach Leistungsstärke des Festkörperlasers sind die Temperaturgradienten unterschiedlich stark ausgebildet. D.h., daß je leistungsstärker der Festkörperlaser ist, desto größer die auftretenden Temperaturgradienten sind. Dies hat wiederum zur Folge, daß im Laserkristall bzw. beim Austritt des Laserstrahls aus dem Laserkristall die Laserstrahlen nicht gebündelt parallel verlaufen, sondern eine je nach Leistungsstärke mehr oder weniger große Streuung aufweisen. Dies hat wiederum Einfluß auf die sogenannte Resonatorgeometrie, da nicht alle im Laserkristall erzeugten Laserstrahlen komplett an den Reflektoren reflektiert werden bzw. ein Teil der an den Reflektoren reflektierten Strahlen nicht wieder in den Laserkristall zurückreflektiert werden. Dies führt zu hohen Leistungsverlusten und zu einer mit zunehmender Pumpleistung der Pump-Lichtquelle schlechteren Strahlqualität. Desweiteren hat dieses "Thermal-Lensing" ebenfalls eine Abnahme der im Resonator zirkulierenden Lichtleistung zur Folge.

Soll die Frequenz des Laserlichtes durch nichtlineare Frequenzverdopplerkristalle verdoppelt werden, so wirkt sich das "Thermal-Lensing" noch drastischer aus. Dies liegt daran, daß die Einkopplung eines nicht beugungsbegrenzten Laserstrahls in den Frequenzverdopplerkristall die Frequenzverdopplereffizienz erheblich herabsetzt.

Bei einem frequenzverdoppelten, diodengepumpten Festkörperlaser, einem sogenannten DPSS-Laser, ist das "Thermal-Lensing" besonders ausgeprägt, da die Pumpleistungsdichte bei relativ kleinem, aktiven Volumen sehr hoch ist.

Bei den bekannten DPSS-Lasern versucht man mit aufwendigen und damit gleichzeitig teueren Konzepten, wie z.B. der Slapgeometrie das "Thermal-Lensing" zu reduzieren. Damit werden aber auch weitere gravierende Nachteile, wie z.B. eine merklich höhere Laserschwelle in Kauf genommen.

Ein weiteres Problem bei einem frequenzverdoppelten, diodengepumpten Festkörperlaser ist die Phasenkopplung zwischen der Fundamentalen und der ersten Harmonischen des erzeugten Laserlichts. Eine solche Phasenkopplung ist notwendig, um Amplitudenschwankungen zu vermeiden. Diese Amplitudenschwankungen entstehen durch Interferenz, d.h. durch Überlagerung der Fundamentalen und der ersten Harmonischen, was insbesondere bei einer sich verändernden Phasendifferenz zu Amplitudenschwankungen des Laserstrahls führen.

Bisher bekannte intrakavitive Frequenzverdopplerresonatoren sind, zur Vermeidung dieser Amplitudenschwankungen als Ringresonatoren ausgebildet. Da diese Ringresonatoren äußerst teuer sind, werden anstatt dieser Ringresonatoren auch häufig Linearresonatoren verwendet. Beim Einsatz eines Linearresonators ist es notwendig, die Resonatorlänge konstant zu halten, um die sogenannte Phase-Matching-Bedingung zu erfüllen, d.h. um eine entsprechende Phasenkopplung zwischen der Fundamentalen und ersten Harmonischen zu erreichen. Die Konstanthaltung der erforderlichen Resonatorlänge wird bei den bekannten Systemen durch eine aufwendige und empfindliche Regelung erreicht, welche mit entsprechenden Stellgliedern zur Konstanthaltung der temperaturabhängigen Resonatorlänge notwendig ist.

Soll desweiteren ein Frequenzverdopplersystem eines Festkörperlasers in einem großen Umgebungstemperaturbereich mit konstanter Effizienz arbeiten, so muß die Temperatur des Frequenzverdopplerkristalls konstant gehalten werden. Eine konstante Temperatur des Frequenzverdopplerkristalls ist zur Erfüllung der Phase-Matching-Bedingung, wie oben beschrieben, notwendig. Treten in einem solchen Frequenzverdopplersystem auch noch hohe Laserleistungen auf, so muß die Temperatur in einem Bereich zwischen 40° und 70° C gehalten werden, um die Gefahr des sogenannten "Greytrack Damage" zu reduzieren. Beim "Greytrack Damage" handelt sich um eine Ergrauung des Frequenzverdopplerkristalls als Folge absorbierter Harmonischer mit einer höheren Ordnung als der zweiten Harmonischen der Fundamentalen. Bei bekannten Temperaturstabilisierungssystemen werden Heiz-Kühlelemente in Verbindung mit einem Temperatursensor verwendet. Bei einem solchen Heiz-Kühlelement handelt es sich in der Regel um einen elektrischen Widerstand oder um ein Peltierelement. Zur Temperaturregelung dieses Heiz-Kühlelementes ist eine Regelelektronik erforderlich, welche über den Temperatursensor, welcher auf dem Frequenzverdopplerkristall angebracht ist, die Temperatur des Frequenzverdopplerkistalls feststellt. Die Herstellungsanforderungen an eine solche Temperaturregelung ist sehr hoch, da die Regelzeitkonstante, d.h. die Zeit der Temperaturerfassung im bzw. am Frequenzverdopplerkristall bis zu welchem Zeitpunkt bis eine eventuell notwendige Temperaturkorrektur vollzogen ist, eine entscheidende Rolle spielt und bei diesen Temperaturstabilisierungssystemen relativ groß ist.

Durch eine geringe Absorbtion im Frequenzverdopplerkristall tritt in diesem eine lokale Eigenerwärmung ein. Wird diese Erwärmung vom Temperatursensor verzögert gemessen, so wird der Phase-Matching-Winkel temperaturabhängig verstimmt und die Ausgangsleistung der Harmonischen sinkt ab. Mit sinkender Ausgangsleistung der Harmonischen geht die Erwärmung des Frequenzverdopplerkristalls wieder zurück, so daß die Leistung wieder ansteigt und eine erneute Temperaturerhöhung stattfindet. Dies führt insgesamt zu einer sehr schwer kontrollierbaren Leistungsoscillation des Festkörperlasers, was auf keinen Fall erwünscht ist.

Gemäß vorstehender Ausführungen liegt der Erfindung die Aufgabe zugrunde, einen Festkörperlaser der gattungsgemäßen Art mit einem wesentlich höheren Wirkungsgrad zu schaffen, wobei gleichzeitig dessen Herstellkosten geringer sein sollen als bei den bisher bekannten Systemen. Desweiteren ist ebenfalls angestrebt, die Baugröße des Festkörperlasers bzw. des Resonators möglichst klein zu halten.

Erfindungsgemäß wird die Aufgabe dadurch gelöst, daß der transversalverlaufende Pump-Lichtstrahl gemäß Anspruch 1 in Achsrichtung des Laserkristalls in seiner Intensität derart moduliert ist, daß in Achsrichtung hintereinander Bereiche mit hoher Energiedichte mit Bereichen geringerer Energiedichte abwechseln, wobei die Anzahl der Bereiche mit geringerer Energiedichte um eins größer ist als die Anzahl der Bereiche mit hoher Energiedichte.

Desweiteren wird die Aufgabe dadurch gelöst, daß der Frequenzverdopplerkristall zur passiven Phasenkopplung zwischen der vom Laserkristall erzeugten Fundamentalen der Lichtquelle und der vom Frequenzverdopplerkristall erzeugten ersten Harmonischen zur Fundamentalen an seiner, dem Laserkristall abgewandten, hinteren Stirnfläche als voll reflektierender Laserspiegel ausgebildet ist.

Eine weitere Lösung der Aufgabe besteht darin, daß zur Konstanthaltung der Temperatur des Frequenzverdopplerkristalls gemäß Anspruch 13 eine oder mehrer thermisch in Reihe und elektrisch parallel geschaltete PTC-Heizzellen (PCT = positive temperature coefficient) vorgesehen sind, die mit dem Frequenzverdopplerkristall in direktem thermischen Kontakt stehen und deren elektrische Widerstände oberhalb einer bestimmten Temperatur abnehmen.

Weiter trägt zur Lösung der Aufgabenstellung bei, daß alle Resonatorkomponenten und der Laserkristall zu einer integrierten Baugruppe zusammengefaßt in einem gemeinsamen Trägerrohr angeordnet sind.

Durch die erfindungsgemäße Ausgestaltung gemäß Anspruch 1 wird eine vollständige Kompensation des sogenannten "Thermal-Lensing" erreicht. Durch den intensitätsmodulierten Pump-Lichtstrahl in Achsrichtung des Laserkristalls werden kontrollierte, thermische Linsen im Laserkristall aufgebaut. Die in der Achsrichtung des Laserkristalls enststehenden Pump-Intensitätsgradienten führen automatisch zu abwechselnden, sich wiederholenden Temperaturgradienten, so daß in Achsrichtung abwechselnd thermische Linsen mit positiver und negativer Brennweite hintereinander liegen. Ist das Modulationsverhältnis in Funktion der Kristallängsachse korrekt eingestellt, nämlich daß die Anzahl der Bereiche mit geringerer Energiedichte um eins größer ist als die Anzahl der Bereiche mit hoher Energiedichte, so erfolgt eine vollständige Kompensation des "Thermal-Lensing"-Effektes, so daß sich dieser nicht mehr auf die Resonatorgeometrie bzw. auf den Festkörperlaser und dessen Leistungsfähigkeit auswirken kann. Durch diese erfindungsgemäße Ausgestaltung ist eine Leistungssteigerung bei beugungsbegrenzter Divergenz des Laserstrahls um einen Faktor fünf bis zehn erreichbar.

Durch die erfindungsgemäße Ausgestaltung gemäß Anspruch 9 ist die aufwendige und empfindliche Regelelektronik samt ihrer Stellglieder zur Konstanthaltung der Resonatorlänge verzichtbar. Durch diese Ausgestaltung wird ein kostengünstiges lineares Resonatormodell erreicht, das keine aktive Längenstabilisierung des Resonators benötigt. Insbesondere dadurch, daß die Temperatur des Frequenzverdopplerkristalls ohnehin konstant gehalten werden muß, unterliegt er auch keinen Längenänderungen, so daß auch keinerlei Interferenzen und damit Leistungsfluktuationen hervorgerufen werden können.

Einen weiteren Beitrag zur Kosteneinsparung wird durch die Ausgestaltung gemäß Anspruch 13 erreicht. Die PTC-Heizzellen weisen eine konstante Temperatur auf, sofern sie gemäß Anspruch 14 mit konstanter Spannung betrieben werden. Wird nun eine solche elektrische konstante Spannung an die PTC-Zellen angelegt, so stellt sich innerhalb kürzester Zeit eine definierte Temperatur, nämlich die Solltemperatur im Frequenzverdopplerkristall ein. Durch die äußerst gute Wärmeleitfähigkeit der PTC-Zellen wird ein im Frequenzverdopplerkristall entstehender zusätzlicher Wärmeeintrag gut abgeleitet. Durch die selbsttätige Regelung dieser Anordnung entfällt die thermische Reaktionszeit zum Temperatursensor, wodurch die oben beschriebene Oszillationsneigung weitgehend eliminiert ist. Somit tragen die Merkmale des Anspruches 13 gleichzeitig zur Stabilisierung des Laserlichtstrahles bei, wobei gleichzeitig die Kosten dieser Temperaturregelung nur einen Bruchteil der bisher bekannten aktiven Regelung betragen.

Durch den Betrieb der PTC-Heizzellen mit einer variablen Betriebsspannung gemäß Anspruch 15, wird eine Feineinstellung der Temperatur des Frequenzverdopplerkristalls und damit eine zusätzliche Stabilisierung der Wellenlänge des erzeugten Laserstrahls erreicht.

Durch die neuartige bzw. erfindungsgemäße integrierte Bauweise gemäß Anspruch 17 werden erhebliche Kosten und Größeneinsparungen bei gleicher Funktion wie bei den bekannten Systemen um etwa den Faktor zehn erreicht. Diese integrierte Bauweise konnte realisiert werden, indem alle Resonatorkomponenten und auch der zugehörige Laserkristall gemäß Anspruch 18 unter interferrometrischer Kontrolle in ein wärmeleitfähiges Trägerrohr in Schalenbauweise mit unter UV-Licht aushärtendem Kleber eingeklebt werden.

Weitere vorteilhafte Ausgestaltungen der Erfindung sind den Ansprüchen 3 bis 8, 10, 11, 12 sowie 14, 16, 19, 20 zu entnehmen.

Anhand der Zeichnung wird die Erfindung im folgenden näher erläutert. Es zeigt:
- Fig. 1: einen erfindungsgemäßen Resonator im perspektivischen Teilschnitt;
- Fig. 2: den Resonator aus Fig. 1 im Längsschnitt;
- Fig. 3: eine Anordnung von Laserdioden mit Laserkristall und dem zugehörigen Linsen- und Prismensystem;
- Fig. 4: einen Pump-Lichtstrahlverlauf bei symmetrisch zum Laserkristall angeordneten Pumpdiodenreihen in Draufsicht;
- Fig. 5: den Pump-Lichtstrahlverlauf aus Fig. 4 in Seitenansicht;
- Fig. 6: einen vergrößerten Ausschnitt VI aus Fig. 5;
- Fig. 7: die Intensitätsverteilung einer Pumpdiode: a) in vertikaler Richtung b) in horizontaler Richtung.
- Fig. 8: eine Modulationskennlinie der Pumpstrahlen aus Fig. 4 bis Fig. 6;
- Fig. 9: einen Frequenzverdopplerkristall mit Temperaturregelelementen;
- Fig. 10: ein Gehäuse zur Aufnahme des Frequenzverdopplerkristall aus Fig. 9;
- Fig. 11: das Gehäuse aus Fig. 10 mit Frequenzverdopplerkristall und Temperaturregelelementen aus Fig. 9 in Draufsicht und in Seitenansicht;
- Fig. 12: den Verlauf eines Intensitätsmodulierten Laserstrahls im Laserkristall.

Die folgend beschriebene Erfindung wird am Beispiel eines frequenzverdoppelten, diodengepumpten Festkörperlasers, nämlich eines Yb:YAG-Lasers erläutert.

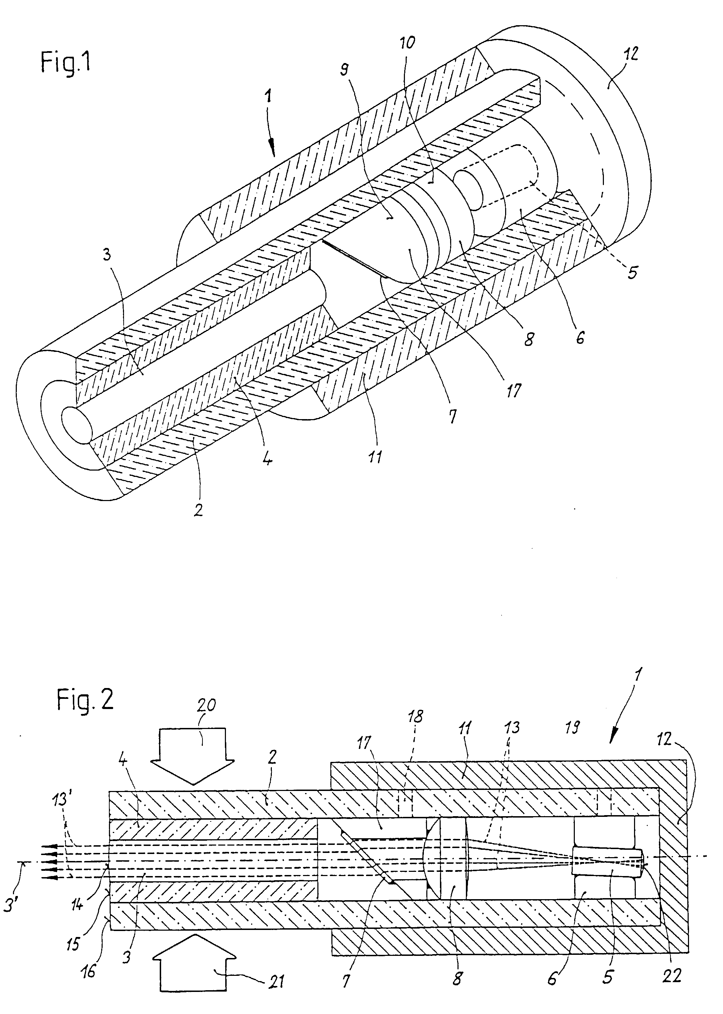

Fig. 1 zeigt im perspektivischen Teilschnitt einen Resonator 1 in der erfindungsgemäßen Bauweise. Als Integrationsbauteil ist ein Trägerrohr 2 vorgesehen, welches alle Resonatorkomponenten aufnimmt. Das Trägerrohr 2 besteht aus einem wärmeleitfähigen und lichtdurchlässigen Material, wie z.B. SiO₂ oder Zerodur. Im vorderen Bereich des Trägerrohrs ist ein Yb:YAG-Laserkristall 3 angeordnet, welcher durch ein Zwischenrohr 4 koaxial im Trägerrohr 2 gehalten ist. Der Außendurchmesser des Trägerrohrs beträgt bei diesem Ausführungsbeispiel etwa 10 mm der Außendurchmesser des Zwischenrohres bzw. der Innendurchmesser des Trägerrohres beträgt etwa 6 mm. Der Laserkristall 3 weist eine Länge von 15 mm und einen Druchmesser von 2,5 mm auf. Die Gesamtlänge des Trägerrohres 2 beträgt 40 mm.

Im hinteren Endbereich des Trägerrohres 2 ist zur Aufnahme eines Frequenzverdopplungskristalles 5 ein zylindrischer Kristallträger 6 vorgesehen, welcher spielfrei im Trägerrohr 2 gelagert ist. Der Kristallträger 6 weist etwa eine Länge von 5 mm und einen Durchmesser von 6 mm auf. Zwischen dem Laserkristall 3 und dem Kristallträger 6 ist im Trägerrohr 2 ein Polarisationsfilter 7 vorgesehen, an welchem kristallträgerseitig eine bikonvexe Fokussierungslinse 8 angekoppelt ist. Sowohl die Fokussierungslinse 8 als auch der Polarisationsfilter 7 sind jeweils mit einer sich in Längsrichtung des Resonators 1 zumindest bereichsweise erstreckenden Zylindermantelfläche 9 bzw. 10 versehen, welche jeweils einen Außendurchmesser von 6 mm aufweist, so daß der Polarisationsfilter 7 und die Fokussierungslinse 8 spielfrei im Trägerrohr 2 aufgenommen sind. Zur in Achsrichtung des Trägerrohres 2 unverschieblichen Befestigung der Fokussierungslinse 8, des Polarisationsfilters 7 des Kristallträgers 6 und des Zwischenrohres 4 ist jeweils eine Klebverbindung vorgesehen. Der Polaristionsfilter 7 ist dabei unter einem Polarisationswinkel von etwa 45° schräg im Trägerrohr 2 verlaufend angeordnet.

Auf das Trägerrohr 2 ist ein Hüllrohr 11 aufgeschoben, welches eine das Trägerrohr 2 verschließende Bodenplatte 12 aufweist und ebenfalls durch eine Klebverbindung auf dem Trägerohr 2 fixiert ist. Die Wandstärken des Trägerrohres 2 und des Hüllrohres 11 sowie der Bodenplatte 12 des Hüllrohres 11 betragen jeweils 2 mm, so daß sich für den gesamten Resonator eine Gesamtlänge von 42 mm ergibt.

Als Klebstoff ist ein durch UV-Licht aushärtender Kleber vorgesehen, so daß alle Resonatorkomponenten und der Laserkristall unter interferometrischer Kontrolle präzise justierbar sind und anschließend der Klebstoff durch UV-Lichtbestrahlung ausgehärtet wird und somit die Resonatorkomponenten und der Laserkristall 3 dauerhaft im Trägerrohr 2 fixiert sind.

Fig. 2 zeigt den Resonator 1 aus Fig. 1 im Längsschnitt, wobei der Laserstrahlverlauf 13 in gestrichelten Linien dargestellt ist. Der Laserkristall 3 und das Zwischenrohr 4 schließen mit ihrer jeweiligen Stirnfläche 14 bzw. 15 mit der Stirnfläche 16 des Trägerrohres 2 bündig ab. Wie aus Fig. 2 erkennbar ist, sind im Trägerrohr 2 im Bereich des Polarisationsfilters bzw. des Trägerelementes 17 des Polarisationsfilters 7 und des Kristallträgers 6 Radialbohrungen 18, 19 vorgesehen, welche zum Einbringen des Klebstoffes in den jeweiligen Klebspalt zwischen den entsprechenden Bauelementen dienen.

Im Bereich des Laserkristalls 3 wird der Resonator 1 von zwei symmetrischen, das Trägerrohr 2 radial beaufschlagenden Pump-Lichtstrahlen 20, 21 beaufschlagt (als Pfeil dargestellt). Beim vorliegenden Ausführungsbeispiel eines Yb:YAG-Lasers beträgt die Wellenlänge des Pump-Lichtstrahles 941 nm. Die Pump-Lichtstrahlen 20 und 21 durchdringen sowohl das Trägerrohr 2 als auch das Füllrohr 11 und aktivieren den Laserkristall 3. Die durch die Pump-Lichtstrahlen 20 und 21 im Laserkristall 3 induzierten Laserstrahlen 13 oscillieren zwischen der vorderen Stirnfläche 15 des Laserkristalles 3 und der hinteren Stirnfläche 22 des Frequenzverdopplerkristalles 5. Das im Laserkristall 3 induzierte Laserlicht weist dabei eine Wellenlänge von 1031 nm. Zur Gewährleistung einer möglichst vollständigen Reflexion der Laserstrahlen im Resonator 1 ist die vordere Stirnfläche 14 des Laserkristalles 3 teilweise verspiegelt und weist einen konvexen Wölbungsradius von 500 mm auf. Zur Reflexion des Laserstrahles 13 ist die hintere Stirnfläche 22 des Frequenzverdopplerkristalles konvex gewölbt ausgeführt und weist einen Wölbungsradius von 2,5 mm auf, wobei die Stirnfläche 22 voll verspiegelt ausgeführt ist.

Im Frequenzverdopplerkristall 5 wird der Laserstrahl 13 auf eine Wellenlänge von 515 nm gebrochen und zurück in den Laserkristall 3 reflektiert. Die Verspiegelung der Stirnfläche 14 ist so gewählt, daß diese für die Wellenlänge von 515 nm durchlässig ist, so daß die Laserstrahlen 13' (Pfeile gestrichelt) mit dieser Wellenlänge an der Stirnfläche 14 ausgekoppelt werden, d.h. den Laserkristall 3 als gebündelten Laserstrahl verlassen. Durch den zwischen dem Frequenzverdopplerkristall 5 und dem Laserkristall 3 angeordneten Polarisationsfilter 7 wird der Laserstrahl 13 beim Durchgang durch den Polarisationsfilter in polarisierte umlaufende Wellen polarisiert und beim Durchgang durch die Fokussierungslinse 8 in den Frequenzverdopplerkristall 5 fokussiert. Die Brennweite der Fokussierungslinse 8 sowie der Abstand zwischen der Fokussierungslinse 8 und des Frequenzverdopplerkristalls 5 sind dabei so gewählt, daß der Brennpunkt der Fokussierungslinse 8 zentral in der Längsmitte des Frequenzverdopplerkristalls 5 liegt, so daß die Laserlichtstrahlen 13 im Frequenzverdopplerkristall 5 eine Frequenzverdopplung erfahren und in sich reflektiert werden.

Es versteht sich, daß für ein anderes Laserdesign auch andere Abmessungen gewählt werden müssen. So ist die konvexe Wölbung der Stirnfläche 14 des Laserkristalls 3 nicht zwingend. Maßgebend für einen Festkörperlaser ist es, eine entsprechende, von der jeweiligen Wellenlänge des erzeugten Laserstrahls bestimmte stabile Resonatorgeometrie zu wählen.

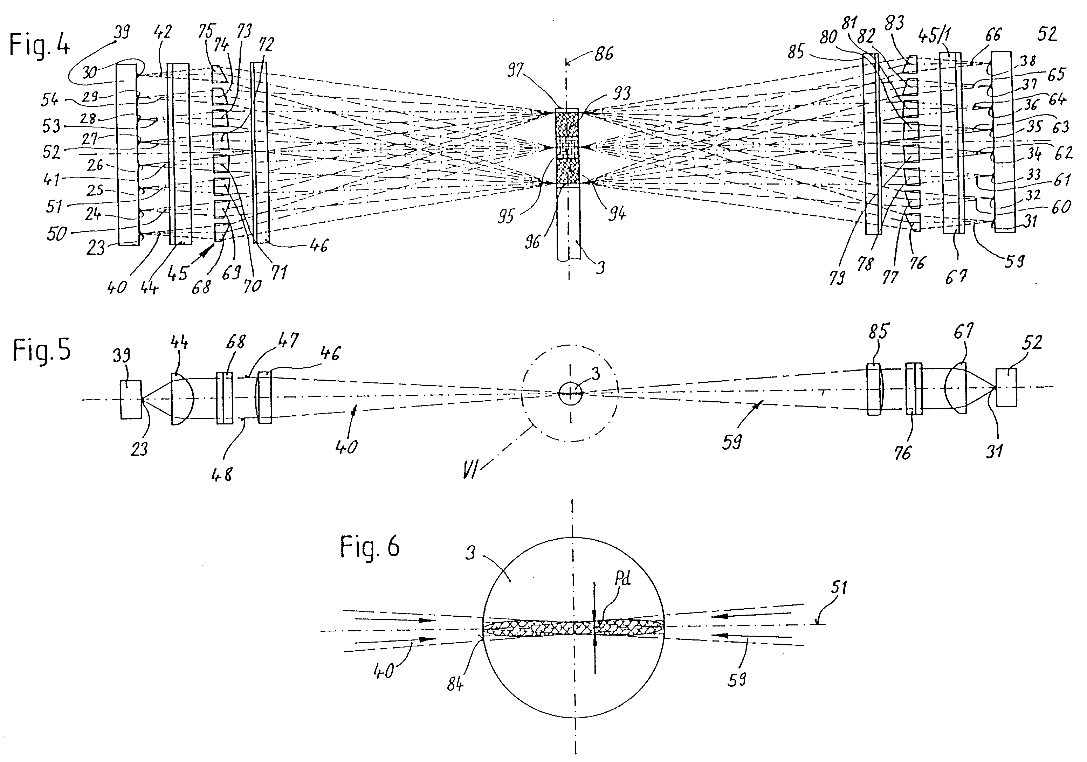

Die Pump-Lichtstrahlen 20 und 21 werden jeweils von 8 Laserdioden 23, 24, 25, 26, 27, 28, 29, 30 bzw. 31, 32, 33, 34, 35, 36, 37, 38 welche in Bezug auf die Längsachse 3' des Laserkristalls sich diametral und symmetrisch gegenüberliegend angeordnet sind (Fig. 4, 5).

In Fig. 3 ist die prinzipielle Anordnung der Laserdioden 23 bis 30 bezüglich des Laserkristalles 3 perspektivisch dargestellt. Aus Gründen der Übersichtlichkeit wurde auf eine Darstellung der zweiten Diodenreihe, welche den Laserdioden 23 bis 30 symmetrisch zum Laserkristall 3 diametral gegenüberliegen verzichtet. Die Laserdioden 23 bis 30 sind auf einem Trägerblock 39 in gleichmäßigen Abständen zueinander angeordnet. Fig. 3 zeigt beispielhaft den Verlauf der Pump-Strahlen 40, 41, 42 der Laserdioden 23 bzw. 26 bzw. 30. Zur Pumpstrahlformung ist ein Linsensystem 43 vorgesehen, welches für jede Laserdiode 23 bis 30 aus drei Elementen besteht. Das Linsensystem 43 besteht aus einer sich über die gesamte Länge des Trägerblocks 39 erstreckenden plankonvexen Linse 44, einem nach Art einer Fresnell-Linse ausgebildeten Prismensystem 45 und einer sich daran anschließenden konvexplanen Beugungslinse 46. Die Pump-Lichtstrahlen 40, 41 und 42 der Laserdioden 23, 26 bzw. 30 und deren Verlauf ist in Fig. 3 beispielhaft dargestellt. Durch die Linse 44 und die Beugungslinse 46 werden die in der vertikalen divergierenden Pump-Lichstrahlen 40, 41, 42 so gebrochen, daß sie senkrecht in die Oberfläche des Laserkristalls 3 eintreten. Der Brechungsindex der Linse 44 ist dabei so gewählt, daß die Pump-Lichstrahlen 40, 41, 42 zwischen der Linse 44 und der Beugungslinse 56 parallel verlaufen. Die Beugungslinse 46 weist eine Brennweite auf, die so gewählt ist, daß sich die Pump-Lichtstrahlen 40, 41, 42 etwa im Bereich der der Eintrittsseite jeweils gegenüberliegenden Mantelfläche 50 des Laserkristalls in dessen Horizontalebene 51 schneiden. Zwischen der Linse 44 und der Beugungslinse 46 ist des Prismensystem 45 angeordnet. Durch das Prismensystem 45 wird der jeweilige Pump-Lichtstrahl 40, 41, 42 in der Horizontalen so abgelenkt, daß sich die Pump-Lichtstrahlen 40, 41, 42 im Laserkristall 3 summierend überdecken.

Fig. 4 zeigt in Draufsicht den Laserkristall 3, die Laserdioden 23 bis 30 sowie die Laserdioden 31 bis 38 in ihrer symmetrischen Anordnung zum Laserkristall 3. Die Laserdioden 31 bis 38 sind ebenfalls auf einem Trägerblock 52 angeordnet. Zwischen den Laserdioden 23 bis 30 ist das Linsensystem 45 angeordnet und zwischen den Laserdioden 31 bis 38 ist ein zweites Linsensystem 53 angeordnet, welche ebenfalls aus einer plankonvexen Linse 67, einem Prismensystem 45/1 und aus einer konvexplanen Beugungslinse gebildet ist. In der Horizontalebene divergieren die gestrichelt dargestellten Pump-Lichtstrahlen 40, 41, 42, 54, 55, 57 und 58 der Laserdioden 23 bis 30 und die Pump-Lichtstrahlen 59, 60, 61, 62, 63, 64, 65, und 66 der Laserdioden 31 bis 38 mit einem Divergenzwinkel von etwa 10° und laufen geradlinig durch die Linse 44 der Laserdioden 23 bis 30 bzw. die Linse 67 der Laserdioden 31 bis 38 bis zum jeweiligen Beugungsprisma 68, 69, 70, 71, 72, 73, 74 und 75 der Laserdioden 23 bis 30 bzw. zum jeweiligen Beugungsprisma 76, 77, 78, 79, 80, 81 und 83 der Laserdioden 31 bis 38. Durch die Beugungsprismen 68 bis 75 bzw. 76 bis 82 werden die zugehörigen Pump-Lichtstrahlen 40, 41, 42, 55 bis 58 bzw. 59 bis 66 so gebrochen, das sie sich im Laserkristall 3 überdecken. Im konkreten Ausführungsbeispiel treten die Pump-Lichtstrahlen 40, 41, 42, 55 bis 58 bzw. 59 bis 66 auf einer Länge von etwa 6,25 mm in den Laserkristall 3 ein und überdecken sich gegenseitig.

Aus Fig. 5 ist der Verlauf der Pumpstrahlen der Laserdioden 23 bis 30 bzw. der Pump-Lichtstrahlen der Laserdioden 31 bis 38 in der Vertikalen dargestellt, welche einen identischen Verlauf aufweisen. Beispielhaft ist dieser Verlauf am Pump-Lichststrahl 40 der Laserdiode 23 bzw. 59 der Laserdiode 31 dargestellt.

Der Pump-Lichtstrahl 40 verläuft ausgehend von der Laserdiode 23 divergierend mit einem Divergenzwinkel von etwa 60° zur Linse 44. Durch die Linse 44 wird der Pump-Lichtstrahl so gebrochen, daß seine Begrenzungsstrahlen 47 und 48 parallel zueinander verlaufend, horizontal durch das entsprechende Prisma 68 hindurchlaufen. Durch die Beugungslinse 46 wird der Pump-Lichtstrahl 40 derart gebrochen, daß er etwa senkrecht in den Laserkristall 3 eintritt. Die Brennweite der Beugungslinse 46 ist dabei so gewählt, daß sich die Pump-Lichtstrahlen 40 der Laserdiode 23 im Bereich der der Eintrittsseite 84 gegenüberliegenden Mantelfläche 50 etwa in der Horizontalebene 51 des Laserkristalles 3 schneiden (Fig. 6). Spiegelsymmetrisch zu diesem Verlauf des Pump-Lichtstrahles 47 verläuft der Pump-Lichtstrahl 59, welcher ebenfalls eine Linse 67, das Prisma 76 und eine Beugungslinse 85 durchläuft. Durch die gewählte Anordnung wird im konkreten Ausführungsbeispiel, bei welchem der Abstand von den Laserdioden 23 bis 30 bzw. 31 bis 38 zur Längsmittelachse 86 des Laserkristalles 3 37,5 mm beträgt, eine mittlere Pumpdicke Pd von 150 µm erreicht. Der Laserkristall 3 weist einen Durchmesser von 2 mm auf, so daß sich insgesamt mit der mittleren Pumpdicke Pd und der von den Pumpsrahlen beaufschlagten Pumplänge von 6,25 mm ein Pumpvolumen bzw. ein aktives Volumen des Laserkristalles 3 von 1,88 mm³ ergibt.

Zum Aufbau von kontrollierten thermischen Linsen, zur Kompensation des "Thermal-Lensings" wird ein intensitätsmodulierter Pumpstrahl benötigt, bei welchem sich in Längsrichtung des Laserkristalls 3 Bereiche mit einer hundertprozentigen Pump-Strahlenergie mit Bereichen einer achtzigprozentigen Pump-Strahlenergie abwechseln.

Diese prozentualen Intensitätsverhältnisse können für ein anderes Laserdesign selbstverständlich verschieden sein. So ist es z.B. möglich, daß die Pumpstrahlenergie bis auf 50 % oder 30 % moduliert werden muß, um das "Thermal-Lensing" vollständig zu kompemsieren.

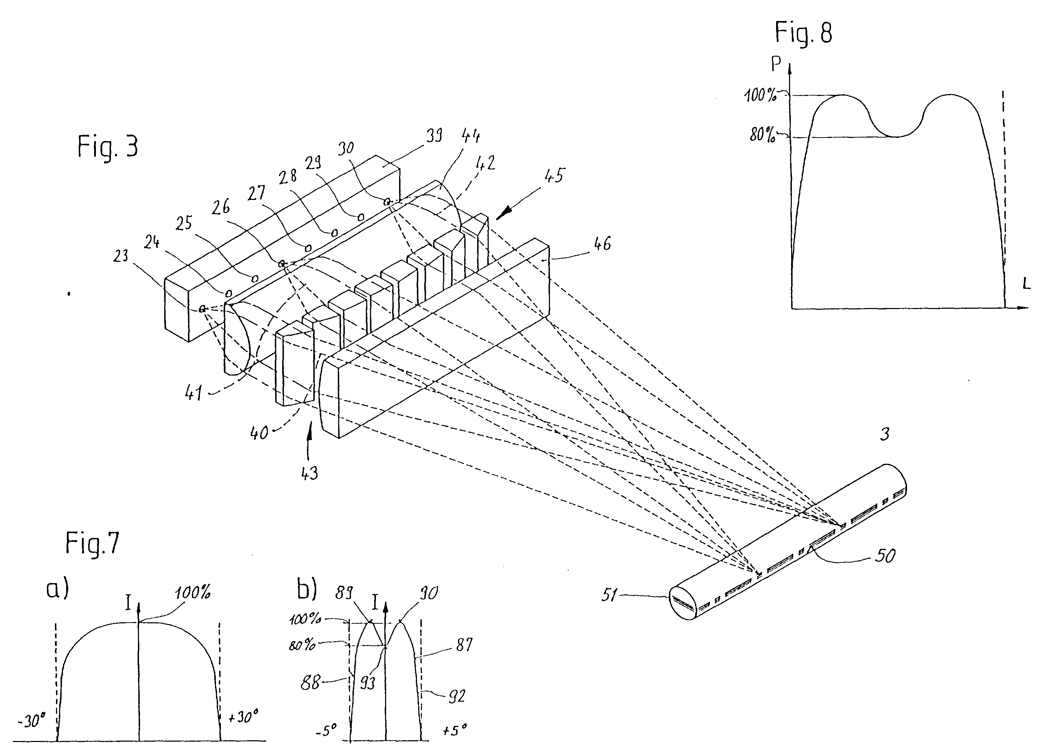

Zur Erzielung dieser Pump-Strahlmodulation wird eine Laserdiode verwendet, welche in der Horizontalebene einen Pumpstrahl aufweist, dessen Intensitätsverlauf in Fig. 7 b) dargestellt ist. Fig. 7 b) zeigt die Intensitätsverteilung einer solchen Pumpdiode in Abhängigkeit vom Divergenzwinkel des Pump-Strahles. Die zugehörige Kennlinie 87 weist eine aufsteigende Flanke 88, zwei Intensitätsmaxima 89, 90 ein zwischen den Intensitätsmaxima 89, 90 liegendes Intensitätsminimum 91 und eine absteigende Flanke 92 auf. Durch diese Intensitätsverteilung wird bei einer entsprechenden Strahlablenkung, wie sie in Fig. 4 dargestellt ist, die gewünschte intensitätsmodulierte Beaufschlagung des Laserkristalles 3 erreicht. Die entsprechenden Bereiche hoher und niedriger Energiedichte im Laserkristall 3 Intensitätsverlauf in Abhängigkeit von der Laserkristallänge L ist in Fig. 8 dargestellt und weist etwa denselben Verlauf auf wie die Intensitätsverteilung in Fig. 7 b) einer solchen Laserdiode. Senkrecht zu dieser Intensitätsverteilung der Laserdiode weist die Laserdiode eine Intensitätsverteilung auf, wie sie Fig. 7 a) zeigt. Diese Intensitätsverteilung I ist ebenfalls über den Divergenzwinkel der Laserdiode, welcher in Fig. 5 erkennbar ist, dargestellt. Durch die aufsteigende Flanke 88 bzw. die absteigende Flanke 89 wird in diesem Bereich bzw. im zugehörigen Laserkristallabschnitt eine 80 %-ige Energiedichte erreicht, während in den Bereichen der Intensitätsmaxima 89, 90 im Laserkristall Bereiche 100 %-iger Energiedichte erreicht werden. Zwischen den Intensitätsmaxima befindet sich demzufolge ein Bereich mit 80 %-iger Energiedichte. In Fig. 4 sind diese Bereiche entsprechend dargestellt, und die Bereiche maximaler Energiedichte 93, 94 schräg schraffiert sind, während der zentrale Bereich geringer Energiedichte 95 vertikal-horizontal schraffiert ist. Außen an die beiden Bereiche 93, 94 schließt sich jeweils ein Bereich 80 %-iger Energiedichte 96 bzw. 97 an.

Durch diese Bereiche unterschiedlicher Intensität bzw. Energiedichte 93, 94 bzw. 95, 96 und 97 werden im Laserkristall 3 automatisch mehrere, sich wiederholende Temperaturgradienten erzeugt, welche zu thermischen Linsen mit positiver und negativer Brennweite führen. Dies hat zur Folge, daß der ursprünglich durch die "Thermal-Lensing"-Wirkung in lediglich einer Richtung abgelenkte bzw. gebrochene Laserstrahl mehrfach in unterschiedlichen sich entgegengesetzten Richtungen abgelenkt wird und somit den Laserkristall beidseitig geradlinig parallel zur optischen Achse, welche der Längsmittelachse 86 des Laserkristalles 3 entspricht, verläßt.

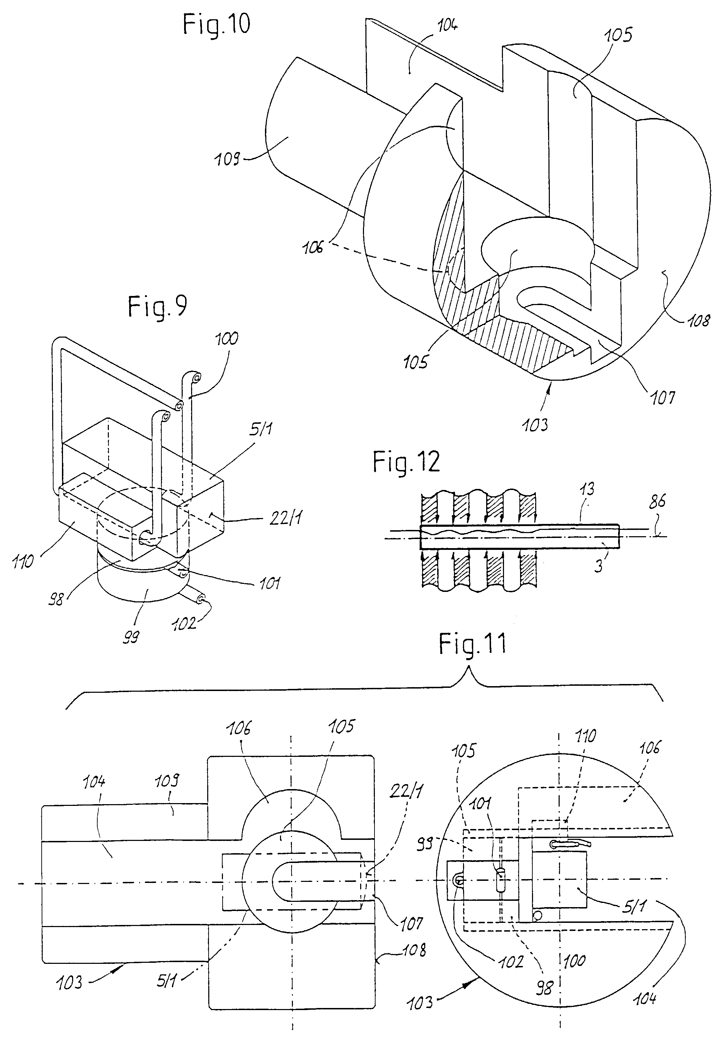

Zum Erreichen dieser Wirkung ist es notwendig, daß die Anzahl der Bereiche mit geringerer Energiedichte 111, 112, 113, 114 um eins größer ist als die Anzahl der Bereiche mit hoher Energiedichte 115, 116, 117, um tatsächlich eine vollständige Kompensation des "Thermal-Lensing"-Effektes zu haben. Die Anzahl der Bereiche hoher und darauf folgender Bereiche geringerer Energiedichte kann auch größer gewählt werden. Desweiteren ist von Bedeutung, daß das gesamte im Strahlengang der Pump-Lichtstrahlen liegende aktivierte Laserkristallvolumen in Längsrichtung des Laserkristalls unterbrechungsfrei oberhalb der jeweils notwendigen differentiellen Absorbtionsschwelle angeregt wird. D.h., daß auch die Bereiche mit der geringer-%-igen Beaufschlagung durch den Pump-Lichtstrahl oberhalb der differentiellen Absorbtionsschwelle gepumpt werden. In Fig. 12 ist der Verlauf des Laserstrahls 13 bei vollständiger Kompensation des "Thermal-Lensing"-Effektes beispielhaft dargestellt. Es ist ersichtlich, daß der Laserstrahl 13 im Laserkristall 3 mehrfach entgegengesetzt abgelenkt wird und schließlich parallel zur Längsachse 86 des Laserkristalls 3 verlaufend den Laserkristall verläßt. Damit wird die Verlustleistung eines Lasers durch die durch den "Thermal-Lensing"-Effekt hervorgerufene Streuung bzw. Beugung des Laserstrahl 13 erheblich reduziert bzw. verhindert, so daß die Leistung des Lasers um einen Faktor zwischen 5 und 10 gesteigert werden kann.

Werden Pump-Lichtquellen verwendet, z.B. Entladungslampen oder aber auch Laserdioden, welche keine entsprechende Intensitätsverteilung ihres Pump-Lichtstrahles aufweisen, so kann die Intesitätsmodulation durch ein Zwischenschalten eines Modulationsgatters erreicht werden. Das Modulationsgatter wird dabei zwischen der Pump-Lichtquelle und dem Laserkristall angeordnet und deckt aufeinanderfolgend den Laserkristall bereichsweise ab. Dabei kann das Modulationsgatter in diesen Bereichen aus einem teildurchlässigen, die Pump-Strahlenergie teilweise absorbierenden Material bestehen, so daß unterschiedliche Intensitätsmodulationen erreichbar sind.

Das Modulationsgatter kann aber auch aus einem völlig lichtundurchlässigen Material gebildet sein, so daß unterschiedliche Intensitätsmodulationen durch die Wahl des Verhältnisses der Duchlaßbreite zur Abschattungsbreite des Modulationsgatters erreichbar sind.

Wie aus Fig. 1 bzw. 2 ersichtlich ist, kann in dem dort beschriebenen Resonator ein Frequenzverdopplerkristall 5 vorgesehen sein, welcher dazu dient, die Wellenlänge des Laserlichtes zu reduzieren bzw. dessen Frequenz zu verdoppeln. In den Fig. 9 bis 11 ist ein solcher Frequenzverdopplerkristall, welcher in Fig. 1 bzw. 2 lediglich prinzipiell dargestellt ist, bzw. dessen Kristallträger im Detail näher dargestellt.

In bei dem im Ausführungsbeispiel beschriebenen Yb:YAG-Laser wird zur Frequenzverdopplung ein KTP-Kristall eingesetzt. Wie aus Fig. 9 hervorgeht, weist der KTP-Kristall 5/1 einen rechteckigen Querschnitt mit einer Kantenlänge von 2 mm und einer Gesamtlänge von 5 mm auf. Unterhalb des KTP-Kristalles sind zwei elektrisch parallel geschaltete PTC-Heizzellen 98,99 angeordnet. Diese PTC-Heizzellen 98 und 99 sind Bauelemente, deren elektrischer Widerstand ab einer gewissen Temperatur abnimmt. Die PTC-Heizzellen 98, 99 stehen mit dem KTP-Kristall 5/1 thermisch in Verbindung, wobei die obere PTC-Heizzelle 98 direkt auf den unteren Planfläche des KTP-Kristalles 5/1 angeordnet ist. Die eine Stirnfläche 22/1 des KTP-Kristalles 5/1 ist konvex gewölbt ausgebildet (s. auch Fig. 2) und dient durch eine entsprechende Beschichtung als Reflektor im Resonator aus Fig. 1. Dadurch wird eine passive Phasenkupplung zwischen der Fundamentalen und der ersten Harmonischen des im KTP-Kristall reflektierten Laserstrahl erreicht. Somit ist durch diese direkt als Resonatorspiegel dienende Stirnfläche 22/1 keine aktive Regelelektronik mit entsprechenden mechanschen Stellgliedern zur Längenstabilisierungen des Resonators 1 nötig, insbesondere auch deshalb, da die Temperatur des KTP-Kristalls 5/1 ohnehin konstant gehalten werden muß.

Die Konstanthaltung der Temperatur des KTP-Kristalls 5/1 erfolgt durch die an dessen unteren Planflächen angeordneten PTC-Heizzellen 98 und 99. Zu diesem Zweck werden die PTC-Heizzellen über ihre entsprechenden Anschlußleitungen 100, 101 und 102 über ein entsprechendes Netzteil mit einer Betriebsspannung von ca. 10 V beaufschlagt. Bei dieser Betriebsspannung stellt sich innerhalb kürzester Zeit eine definierte Solltemperatur im KTP-Kristall 5/1 von ca. 50° C ein. Durch die recht gute Wärmeleitfähigkeit der PTC-Heizzellen 98, 99 wird ein im KTP-Kristall 5/1 entstehender zusätzlicher Wärmeeintrag äußerst gut abgeleitet, so daß die Temperatur des KTP-Kristalls 5/1 stets konstant gehalten wird. Somit läßt sich durch einfaches Anlegen einer konstanten Spannung an die PTC-Heizzellen 98, 99 die optimale Betriebstemperatur des KTP-Kristalls 5/1 einstellen und entsprechend konstant halten.

Zur zusätzlichen Stabilisierung der Wellenlänge des frequenzverdoppelten Laserstrahls können die PTC-Heizzellen 98, 99 auch mit einer variablen Spannung betrieben werden, welche abhängig von der tatsächlichen KTP-Temperatur über eine entsprechende Regelelektronik eingestellt wird. Für die Temperaturmessung des KTP-Kristalls 5/1 kann ein Sensor z.B. in Form einer Photozelle vorgesehen sein. Damit ist eine zusätzliche Feineinstellung der Temperatur des KTP-Kristalls 5/1 ermöglicht und damit eine zusätzliche Stabilisierung des KTP-Kristalls 5/1 und eine Stabiliesierung der Wellenlänge.

Fig. 10 zeigt ein Frequenzverdopplergehäuse 103, welches zum Einbau der kompletten KTP-Kristall 5/1 und PTC-Heizelemente-Einheit in den Resonator 1 aus Fig. 1 vorgesehen ist. Das Frequenzverdopplergehäuse 103 weist eine durchgehende Längsnut 104 auf, welche mit einer entsprechenden Aufnahmebohrung 105 bzw. einer runden Ausnehmung 106 und einer an seiner hinteren Stirnfläche 108 in der Aufnahmebohrung 105 angeordneten Nut 107 für den Anschlußdraht 101 der PTC-Heizzelle 99 versehen ist. Wie aus Fig. 11 hervorgeht ist in das Frequenzverdopplergehäuse 103 der KTP-Kristall 5/1 mit seinen beiden PTC-Heizzellen 98 und 99 eingesetzt. Das Freqenzverdopplergehäuse 103 ist abgesetzt ausgeführt, d.h. es weist einen im Durchmesser verjüngten Bundschaft 109 auf, mit welchem es beispielsweise in das Trägerrohr 2 des Resonators 1 von seiner Rückseite her einsteckbar und im Trägerrohr 2 ebenfalls mittels eines durch UV-Lichtbestrahlung aushärtendem Kleber festsitzend befestigbar ist. Das Frequenzverdopperlergehäuse 103 ist vorzugsweise aus einer MACCOR-Keramik gefertigt.

Desweiteren ist am KTP-Kristall 5/1 ein Meß-NTC 110 als ein die Temperatur des Frequenzverdopplerkristalls überwachender Startverzögerungssensor vorgesehen, welcher über eine entsprechende Startelektronik (in der Zeichnung nicht dargestellt) die Laserdioden 23 bis 30 bzw. 31 bis 38 und damit den Laserbetrieb erst freigibt, wenn im Frequenzverdopplerkristall 5/1 dessen notwendige Betriebstemperatur im Bereich von 40° bis 70° C erreicht ist. Dadurch wird eine Zerstörung des Laserkristalls 3 wirksam verhindert.

Durch das erfindungsgemäße Laser-Design wird ein Festkörperlaser zur Verfügung gestellt, welcher äußerst kostengünstig herstellbar ist. Gleichzeitig weist dieser Festkörperlaser bzw. ein nach dieser Konzeption hergestellter Festkörperlaser einen wesentlich höheren Wirkungsgrad auf, als sämtliche bekannten Festkörperlaser. Je nach Einsatzgebiet sind die einzelnen erfindungswesentlichen Merkmale, so der Pump-Intensitätsgradient zur Kompensierung des "Thermal-Lensing"-Effektes, wie auch die direkte Verspiegelung einerseits des Frequenzverdopplerkristalls bzw. des Laserkristalls und aber auch die Art und Weise der Temperaturkonstanthaltung des Frequenzverdopplerkristalls geeignet, einzeln an einem eventuell bestehenden System eingesetzt zu werden, so daß mit der zur Verfügung gestellten technischen Lehre auch bestehende Lasersysteme entsprechend kostengünstig nachgerüstet werden können.

## Patentansprüche

1. Festkörperlaser mit einem Resonator (1) und einem im wesentlichen achsparallel zur Resonatorachse angeordneten, stabförmigen Laserkristall (3), welcher durch wenigstens zwei transversal eingekoppelte, achssymmetrische Pump-Lichtstrahlen (20, 21) zumindest auf einem Teil seiner Länge angeregt wird, **dadurch gekennzeichnet, dass** Mittel vorhanden sind, die die transversal verlaufenden Pump-Lichtstrahlen (20, 21) in Achsrichtung des Laserkristalls (3) in seiner Intensität derart modulieren, dass im Laserkristall (3) in Achsrichtung (3') hintereinander Bereiche mit hoher Energiedichte mit Bereichen geringerer Energiedichte abwechseln, wobei die Anzahl der Bereiche mit geringerer Energiedichte um eins größer ist als die Anzahl der Bereiche mit hoher Energiedichte.

2. Festkörperlaser nach Anspruch 1, **dadurch gekennzeichnet, dass** die Pump-Lichtstrahlen (20, 21) von Laserdioden erzeugt werden, welche in bezug auf die Achse (3') des Laserkristalls (3) sich diametral und symmetrisch gegenüberliegend angeordnet sind, wobei auf jeder Seite des Laserkristalls (3) wenigstens eine Laserdiode angeordnet ist.

3. Festkörperlaser nach Anspruch 2, **dadurch gekennzeichnet, dass** auf jeder Seite des Laserkristalls (3) jeweils acht Laserdioden (23 - 30) angeordnet sind.

4. Festkörperlaser nach einem der Ansprüche 1 bis 3, **dadurch gekennzeichnet, dass** die Pump-Lichtstrahlen (20, 21) jeweils durch optische Linsen- und/oder Prismensysteme derart fokusiert sind, dass sie senkrecht in die Oberfläche des Laserkristalls (3) eintreten und dass die Brennpunkte des jeweiligen Linsen- und/oder Prismensystems zumindest annähernd im Bereich der der Eintrittsseite jeweils gegenüberliegenden Mantelfläche des Laserkristalls liegen.

5. Festkörperlaser nach einem der Ansprüche 1 bis 4, **dadurch gekennzeichnet, dass** die Pump-Lichtstrahlen (20, 21) nur einen Teil des Gesamtvolumens des Laserkristalls (3) als aktives Volumen beaufschlagen.

6. Festkörperlaser nach Anspruch 5, **dadurch gekennzeichnet, dass** von den Pump-Lichtstrahlen (20, 21) nur ein Teil des Laserkristallquerschnitts beaufschlagt und aktiviert wird.

7. Festkörperlaser nach einem der Ansprüche 1 bis 6, **dadurch gekennzeichnet, dass** das gesamte im Strahlengang der Pump-Lichtstrahlen (20, 21) liegende aktivierte Laserkristallvolumen unterbrechungsfrei oberhalb der jeweils notwendigen differentiellen Absorbtionsschwelle angeregt wird.

8. Festkörperlaser nach Anspruch 1, **dadurch gekennzeichnet, dass** der Pump-Lichtstrahl (20, 21) von einer Xenonimpulslampe, einer Krypton-Hochdruckentladungslampe oder dgl. erzeugt wird, und dass zur Intensitätsmodulation des Pump-Lichtstrahls (20, 21) zwischen dem Laserkristall (3) und der Lampe ein Modula-tionsgatter vorgesehen ist, welches in Achsrichtung (3') des Laserkristalls aufeinanderfolgend Bereiche geringerer und stärkerer Lichtdurchlässigkeit aufweist.

9. Festkörperlaser nach einem der Ansprüche 1 bis 8 **dadurch gekennzeichnet, dass** dieser einen Frequenzverdopplerkristall (5) aufweist, wobei der Frequenzverdopplerkristall (5) zur passiven Phasenkopplung zwischen der vom Laserkristall (3) erzeugten Fundamentalen der Lichtwelle und der vom Frequenzverdopplerkristall (5) erzeugten ersten Harmonischen zur Fundamentalen an seiner, dem Laserkristall (3) abgewandten, hinteren Stirnfläche (22) als vollreflektierender Laserspiegel ausgebildet ist.

10. Festkörperlaser nach Anspruch 9, **dadurch gekennzeichnet, dass** die hintere Stirnfläche (22) als konvexe, verspiegelte Fläche ausgebildet ist.

11. Festkörperlaser nach Anspruch 9 oder 10, **dadurch gekennzeichnet, dass** vom Frequenzverdoppler (5) abgewandte Stirnfläche (14) der Laserkristalls (3) als Auskoppelspiegel ausgebildet ist.

12. Festkörperlaser nach Anspruch 11, **dadurch gekennzeichnet, dass** die als Auskoppelspiegel ausgebildete Strinfläche (14) des Laserkristalls (3) eine schwach konvexe Form aufweist.

13. Festkörperlaser nach einem der Ansprüche 9 bis 12 **dadurch gekennzeichnet, dass** zur Konstanthaltung der Temperatur des Frequenzverdopplerkristall (5) eine oder mehrere thermisch in Reihe und elektrisch parallel geschaltete PTC-Heizzellen (98, 99) vorgesehen sind, die mit dem Frequenzverdopplerkristall (5) in direktem thermischem Kontakt stehen und deren elektrische Widerstände oberhalb einer bestimmten Temperatur abnehmen.

14. Festkörperlaser nach Anspruch 13, **dadurch gekennzeichnet, dass** die PTC-Heizzellen (98, 99) mit konstanter elektrischer Spannung betrieben werden.

15. Festkörperlaser nach Anspruch 13, **dadurch gekennzeichnet, dass** die PTC-Heizzellen (98, 99) über einen die Temperatur des Frequenzverdopplerkristalls (5) feststellenden Sensor und einer entsprechenden Regelelektronik mit variabler Spannung betrieben werden, so dass eine Feineinstellung der Temperatur und damit eine zusätzliche Stabilisierung des Frequenzverdopplerkristalls (5) ermöglicht ist.

16. Festkörperlaser nach einem der Ansprüche 13 bis 15, **dadurch gekennzeichnet, dass** am Frequenzverdopplerkristall (5) ein die Temperatur des Frequenzverdopplerkristalls (5) überwachender Startverzögerungssensor angeordnet ist, der über eine entsprechende Startelektronik die Laserdioden und damit den Laserbetrieb erst freigibt, wenn der Frequenzverdopplerkristall die notwendige Betriebstemperatur erreicht hat.

17. Festkörperlaser nach einem der Ansprüche 1 bis 16 mit einem Resonator (1) umfassend die Resonatorkomponenten Frequenzverdopplerkristall (5), Kristallträger (6), Polarisationsfilter (7), Fokussierungslinse (8) und den Resonatorspiegeln (14, 22) und einem im wesentlichen achsparallel zur Resonatorachse (3') verlaufenden Laserkristall (3), **dadurch gekennzeichnet**, dass alle Resonatorkomponenten (5, 6, 7, 8, 14, 22) und der Laserkristall (3) zu einer integrierten Baugruppe zusammengefaßt in einem gemeinsamen Trägerrohr (2) angeordnet sind.

18. Festkörperlaser nach Anspruch 17, **dadurch gekennzeichnet, dass** die Resonatorkomponenten (5, 6, 7, 8, 14, 22) und der Laserkristall (3) im Trägerrohr (2) mittels eines durch UV-Licht aushärtenden Kleber fixiert sind.

19. Festkörperlaser nach Anspruch 17 oder 18, **dadurch gekennzeichnet, dass** das Trägerrohr (2) aus einem wärmeleitfähigen und lichtdurchlässigen Material besteht.

20. Verfahren zur Herstellung eines Festkörperlasers nach einem der Ansprüche 17 bis 19 **dadurch gekennzeichnet, dass** alle Resonatorkomponenten (5, 6, 7, 8, 14, 22) im Trägerrohr (2) mit interferometischer Kontrolle präzise justiert werden.

## Claims

1. Solid state laser with a resonator (1) and a rod-like laser crystal (3) arranged essentially axially parallel to the resonator axis, which is stimulated on at least part of its length by at least two transversely coupled axially symmetrical pump light beams (20, 21), characterised in that means are provided which modulate the intensity of the transversely running pump light beams (20, 21) in the axial direction of the laser crystal (3) such that in the laser crystal (3) in the axial direction (3') successive areas of high energy density alternate with areas of lower energy density, where the number of areas with lower energy density is one greater than the number of areas of high energy density.

2. Solid state laser according to claim 1, characterised in that the pump light beams (20, 21) are generated by laser diodes which are arranged diametrically and symmetrically opposite in relation to the axis (3') of the laser crystal (3), where on each side of the laser crystal (3) is arranged at least one laser diode.

3. Solid state laser according to claim 2, characterised in that on each side of the laser crystal (3) are arranged in each case eight laser diodes (23 - 30).

4. Solid state laser according to any of claims 1 to 3, characterised in that the pump light beams (20, 21) are focused by optical lens and/or prism systems such that they enter the surface of the laser crystal (3) vertically and that the focal points of the lens and/or prism systems concerned lie at least approximately in the area of the casing surface of the laser crystal opposite the inlet side.

5. Solid state laser according to any of claims 1 to 4, characterised in that the pump light beams (20, 21) load only part of the total volume of the laser crystal (3) as active volume.

6. Solid state laser according to claim 5, characterised in that only part of the laser crystal cross section is loaded and activated by the pump light beams (20, 21).

7. Solid state laser according to any of claims 1 to 6, characterised in that the total activated laser crystal volume lying in the beam path of the pump light beams (20, 21) is stimulated without interruption above the differential absorption threshold necessary in each case.

8. Solid state laser according to claim 1, characterised in that the pump light beam (20, 21) is generated by a xenon flash light, a krypton high pressure discharge lamp or similar and that to modulate the intensity of the pump light beam (20, 21), between the laser crystal (3) and the lamp is provided a modulation grid which in the axial direction (3') of the laser crystal has successive areas of lesser and greater light permeability.

9. Solid state laser according to any of claims 1 to 8, characterised in that this has a frequency doubling crystal (5), where the frequency doubling crystal (5), for passive phase coupling between the fundamental of the light wave generated by the laser crystal (3) and the first harmonic in relation to its fundamental generated by the laser doubling crystal (5), is formed as a fully reflective laser mirror on its rear surface (22) facing away from the laser crystal (3).

10. Solid state laser according to claim 9, characterised in that the rear surface (22) is formed as a convex metallised surface.

11. Solid state laser according to claim 9 or 10, characterised in that the surface (14) of the laser crystal (3) facing away from the frequency doubler (5) is formed as a neutralising mirror.

12. Solid state laser according to claim 11, characterised in that the face (14) of the laser crystal (3) formed as a neutralising mirror has a slightly convex form.

13. Solid state laser according to any of claims 9 to 12, characterised in that to hold the temperature of the frequency doubling crystal (5) constant, one or more PTC heating cells (98, 99) are provided arranged thermally in series and connected electrically in parallel which are in direct thermal contact with the frequency doubling crystal (5) and the electric resistance of which decreases above a certain temperature.

14. Solid state laser according to claim 13, characterised in that the PTC heating cells (98, 99) are operated at a constant electric voltage.

15. Solid state laser according to claim 13, characterised in that the PTC heating cells (98, 99) are operated at variable voltage via a sensor establishing the temperature of the frequency doubling crystal (5) and corresponding control electronics such that fine adjustment of the temperature and hence additional stabilization of the frequency doubling crystal (5) is possible.

16. Solid state laser according to any of claims 13 to 15, characterised in that on the frequency doubling crystal (5) is arranged a start delay sensor which monitors the temperature of the frequency doubling crystal (5) and only releases the laser diodes and hence the laser operation via corresponding start electronics when the frequency doubling crystal has reached the necessary operating temperature.

17. Solid state laser according to any of claims 1 to 16 with a resonator (1) comprising the resonator components frequency doubling crystal (5), crystal carrier (6), polarisation filter (7), focusing lens (8) and resonator mirrors (14, 22), and a laser crystal (3) running essentially axially parallel to the resonator axis (3'), characterised in that all resonator components (5, 6, 7, 8, 14, 22) and the laser crystal (3) are combined into an integrated assembly and arranged in a common support tube (2).

18. Solid state laser according to claim 17, characterised in that the resonator components (5, 6, 7, 8, 14, 22) and the laser crystal (3) are fixed in the supporting tube (2) by means of an adhesive which hardens under UV light.

19. Solid state laser according to claim 17 or 18, characterised in that the support tube (2) consists of a heat conductive and light permeable material.

20. Process for production of a solid state laser according to any of claims 17 to 19, characterised in that all resonator components (5, 6, 7, 8, 14, 22) are precisely adjusted in the supporting tube (2) by interferometric control.

## Revendications

1. Laser solide comportant un résonateur (1) et un cristal laser (3), en forme de barre, dont l'axe est essentiellement parallèle à celui du résonateur, cristal laser qui est excité sur au moins une partie de sa longueur par au moins deux rayons lumineux de pompage (20, 21), à symétrie axiale, à couplage transversal, caractérisé en ce qu'il dispose de moyens qui modulent l'intensité des rayons lumineux de pompage transversaux (20, 21) dans la direction de l'axe du cristal laser (3) de façon que, dans le cristal laser (3), il y ait alternance, dans la direction de l'axe (3'), de zones à grande densité d'énergie et de zones à plus faible densité d'énergie, le nombre des zones à faible densité d'énergie dépassant de un le nombre des zones à grande densité d'énergie.

2. Laser solide selon la revendication 1, caractérisé en ce que les rayons lumineux de pompage (20, 21) sont produits par des diodes laser, qui sont disposées diamétralement, et symétriquement opposées par rapport à l'axe (3') du cristal laser (3), au moins une diode laser étant disposée sur chaque côté du cristal laser (3).

3. Laser solide selon la revendication 2, caractérisé en ce que huit diodes laser (23 à 30) sont disposées sur chaque côté du cristal laser (3).

4. Laser solide selon l'une des revendications 1 à 3, caractérisé en ce que les rayons lumineux de pompage (20, 21) sont chacun focalisés par des systèmes de lentilles optiques et/ou de prismes de façon à pénétrer normalement dans la surface du cristal laser (3), et de façon que les foyers de chaque système de lentilles et/ou de prismes se trouvent, au moins approximativement, dans la zone de l'enveloppe du cristal laser opposée au côté d'entrée.

5. Laser solide selon l'une des revendications 1 à 4, caractérisé en ce que les rayons lumineux de pompage (20, 21) n'arrivent que dans une partie du volume total du cristal laser (3) servant de volume actif.

6. Laser solide selon la revendication 5, caractérisé en ce que les rayons lumineux de pompage (20, 21) ne touchent et n'activent qu'une partie de la section transversale du cristal laser.

7. Laser solide selon l'une des revendications 1 à 6, caractérisé en ce que la totalité du volume du cristal laser activé, se trouvant sur le trajet des rayons lumineux de pompage (20, 21), sont excités sans interruption au-delà du seuil d'absorption différentiel nécessaire dans chaque cas.

8. Laser solide selon la revendication 1, caractérisé en ce que le rayon lumineux de pompage (20, 21) est produit par une lampe à impulsions au xénon, une lampe à décharge haute pression au krypton ou analogues, et que, pour assurer la modulation en intensité du rayon lumineux de pompage (20, 21) entre le cristal laser (3) et la lampe, on prévoit une grille de modulation, qui dans la direction de l'axe (3') du cristal laser possède des zones successives ayant une transparence plus petite et une transparence plus forte à la lumière.

9. Laser solide selon l'une des revendications 1 à 8, caractérisé en ce qu'il possède un cristal doubleur de fréquence (5), le cristal doubleur de fréquence (5) étant configuré sous forme d'un miroir laser à réflexion totale pour permettre le couplage passif des phases entre la fondamentale, produite par le cristal laser (3), de l'onde lumineuse, et la première harmonique de la fondamentale, produite par le cristal doubleur de fréquence (5), au niveau de sa surface frontale arrière (22) opposée au cristal laser (3).

10. Laser solide selon la revendication 9, caractérisé en ce que la surface frontale arrière (22) est configurée comme une surface convexe sur laquelle on a appliqué une couche réfléchissante.

11. Laser solide selon la revendication 9 ou 10, caractérisé en ce que la face frontale (14), opposée au doubleur de fréquence (5) du cristal laser (3), est configurée comme un miroir de découplage.

12. Laser solide selon la revendication 11, caractérisé en ce que la face frontale (14), configurée comme un miroir de découplage, du cristal laser (3) a une forme faiblement convexe.

13. Laser solide selon l'une des revendications 9 à 12, caractérisé en ce que, pour maintenir constante la température du cristal doubleur de fréquence (5), on prévoit une ou plusieurs cellules chauffantes PTC (98, 99), montées thermiquement en série et électriquement en parallèle, et qui sont en contact thermique direct avec le cristal doubleur de fréquence (5), et dont la résistance électrique diminue au-delà d'une certaine température.

14. Laser solide selon la revendication 13, caractérisé en ce que les cellules chauffantes PTC (98, 99) sont exploitées avec une tension électrique constante.

15. Laser solide selon la revendication 13, caractérisé en ce que les cellules chauffantes PTC (98, 99) sont exploitées par l'intermédiaire d'un capteur qui définit la température du cristal doubleur de fréquence (5) et d'une électronique appropriée de réglage à tension variable, de façon à permettre le réglage fin de la température et donc une stabilisation supplémentaire du cristal doubleur de fréquence (5).

16. Laser solide selon l'une des revendications 13 à 15, caractérisé en ce que, au niveau du cristal doubleur de fréquence (5), est disposé un capteur de retard de démarrage, qui surveille la température du cristal doubleur de fréquence (5), capteur qui, par l'intermédiaire d'une électronique appropriée de démarrage, ne libère les diodes laser et donc le fonctionnement du laser que quand le cristal doubleur de fréquence a atteint la température nécessaire de marche.

17. Laser solide selon l'une des revendications 1 à 16, comportant un résonateur (1) qui englobe les composants de résonateur suivants : un cristal doubleur de fréquence (5), un support de cristal (6), un filtre polarisant (7), une lentille de focalisation (8) et les miroirs de résonateur (14, 22), ainsi qu'un cristal laser (3), dont l'axe est essentiellement parallèle à l'axe (3') du résonateur, caractérisé en ce que tous les composants du résonateur (5, 6, 7, 8, 14, 22) et le cristal laser (3) sont disposés en étant réunis pour former un module intégré dans un tube porteur commun (2).

18. Laser solide selon la revendication 17, caractérisé en ce que les composants du résonateur (5, 6, 7, 8, 14, 22) et le cristal laser (3) sont fixés dans le tube porteur (2) à l'aide d'un adhésif qui durcit à la lumière UV.

19. Laser solide selon la revendication 17 ou 18, caractérisé en ce que le tube porteur (2) est constitué d'un matériau conducteur de la chaleur et transparent.

20. Procédé de fabrication d'un laser solide selon l'une des revendications 17 à 19, caractérisé en ce que tous les composants du résonateur (5, 6, 7, 8, 14, 22) sont, dans le tube porteur (2), ajustés avec précision à l'aide d'un contrôle interférométrique.
